(19) Europäisches Patentamt / European Patent Office / Office européen des brevets

(11) **EP 2 413 065 B1**

(12) **EUROPEAN PATENT SPECIFICATION**

(45) Date of publication and mention
of the grant of the patent:
**08.05.2019 Bulletin 2019/19**

(51) Int Cl.:
*F25B 1/00* ^(2006.01)    *F25B 1/10* ^(2006.01)
*F25B 6/02* ^(2006.01)    *F25B 41/00* ^(2006.01)
*F25B 49/02* ^(2006.01)

(21) Application number: **10755635.9**

(22) Date of filing: **19.03.2010**

(86) International application number:
**PCT/JP2010/001974**

(87) International publication number:
**WO 2010/109832 (30.09.2010 Gazette 2010/39)**

(54) **REFRIGERATOR**

KÜHLSCHRANK

RÉFRIGÉRATEUR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.03.2009 JP 2009076781**

(43) Date of publication of application:
**01.02.2012 Bulletin 2012/05**

(73) Proprietor: **Mitsubishi Electric Corporation
Tokyo 100-8310 (JP)**

(72) Inventors:
• **SATA, Hiroshi**
**Tokyo 100-8310 (JP)**
• **ISHIKAWA, Tomotaka**
**Tokyo 100-8310 (JP)**
• **OCHIAI, Yasutaka**
**Tokyo 100-8310 (JP)**
• **TANAKA, Kousuke**
**Tokyo 100-8310 (JP)**
• **IKEDA, Takashi**
**Tokyo 100-8310 (JP)**

(74) Representative: **Pfenning, Meinig & Partner mbB
Patent- und Rechtsanwälte
Theresienhöhe 11a
80339 München (DE)**

(56) References cited:
JP-A- 2002 243 314    JP-A- 2003 185 286
JP-A- 2007 051 841    JP-A- 2007 255 730
JP-A- 2007 263 444    JP-A- 2008 106 738
JP-A- 2009 228 978    US-A1- 2007 107 451

## Description

Technical Field

The present invention relates to a refrigerator provided with a refrigerant circuit that connects a compressor, a condenser, a supercooling heat exchange portion, a throttle valve, and an evaporator connected by piping.

Background Art

Hitherto, as for this type of a refrigerator, a refrigerator described in the following Patent Literature 1, for example, has been known. The refrigerator described in this document is provided with a refrigerant circuit in which a compressor, a condenser, a supercooling heat exchanger portion, a throttle valve, and an evaporator connected in this order by piping, an intermediate-pressure injection circuit branching at a downstream position in a refrigerant flowing direction of the supercooling heat exchanger portion in the refrigerant circuit and leading to an intermediate pressure chamber of the compressor, a throttle valve for an intermediate pressure having a variable valve opening-degree disposed in the intermediate-pressure injection circuit, a suction injection circuit branching from a downstream position in the refrigerant flowing direction of the supercooling heat exchanger portion in the refrigerant circuit and leading to a refrigerant suction side of the compressor via the supercooling heat exchanger portion, a supercooling throttle valve having a variable valve opening-degree disposed on the refrigerant inlet side of the supercooling heat exchanger portion in the suction injection circuit, and operation state detecting means that detects operation state data in the refrigerant circuit such as a discharge temperature sensor, a temperature sensor on the outlet side of the supercooling heat exchanger portion of the refrigerant circuit, a temperature sensor on the outlet side of the supercooling heat exchange portion in the suction injection circuit. This refrigerator is configured such that by controlling an opening-degree of the throttle valve for an intermediate pressure in the intermediate-pressure injection circuit, a discharge gas refrigerant temperature of the compressor is controlled. Also, by controlling the opening-degree of the supercooling throttle valve in the suction injection circuit, re-evaporation of the refrigerant is prevented by supercooling the refrigerant on the downstream side of the condenser and excessive filling of the refrigerant and deterioration in refrigerating capacity are prevented.

JP 2003 185286 describes an air conditioner that comprises a compressor, a heat source side heat exchanger, a receiver, a main compression device, a use side heat exchanger, and an injection circuit guiding refrigerant of the receiver to an intermediate pressure chamber or the suction side of the compressor. This system is so set that in cooling, the refrigerant flows in the order of the heat source side heat exchanger, the receiver, and the main decompression device, while in heating, the refrigerant flows in the order of the main decompression device, and receiver, and the heat source side heat exchanger. The receiver is provided with a flow direction control circuit connected thereto via a refrigerant inflow pipe and refrigerant outflow pipe. The flow direction control circuit is so constituted that the refrigerant flowing from the heat source side heat exchanger to the receiver and the refrigerant flowing from the main decompression device to the receiver are made to flow to the receiver via the refrigerant inflow pipe, while the refrigerant flowing from the receiver to the heat source side heat exchanger and the refrigerant flowing from the receiver to the main decompression device are made to flow from the receiver via the refrigerant outflow pipe.

US 2007/107451A discloses a refrigerating apparatus that can control the supercooling degree of liquid refrigerant irrespective of changes in circulating refrigerant amounts in a refrigeration cycle.

JP 2008 106738A discloses a rotary compressor which comprises a refrigerant discharge part 462 for discharging the compressed refrigerant generated by the compression part 3 toward the inner peripheral surface of the airtight container 2, and disposes a discharge temperature sensor 20 for detecting the temperature of the discharged compressed refrigerant on the outer peripheral side of the airtight container 2 at the portion opposed to the refrigerant discharge part 462.

JP 2007 051841A discloses that a first expansion valve 104 is controlled based on the difference in detection temperature between the evaporation temperature sensor 143 and the first pipe temperature sensor 112, and the flow control valve 141 is controlled based on the difference in detection temperature between the evaporation temperature sensor 143 and the second pipe temperature sensor 142.

Citation List

Patent Literature

Patent Literature 1: Japanese Unexamined Patent Application Publication No. 2005-274085

## Summary of Invention

### Technical Problem

The above prior-art refrigerator has two injection circuits that are an intermediate-pressure injection circuit and a suction injection circuit and also has a throttle valve for an intermediate-pressure and a supercooling throttle valve accordingly, and thus, pipeline configuration and control configuration become complicated, and manufacturing cost is high.

Also, since the refrigerant supercooled in the supercooling heat exchanger portion is returned to the suction side of the compressor by a suction injection circuit, operation must be low efficiency.

Also, since specifications of the supercooling heat exchanger portions are different by each model of different operation capacity, the number of production lot becomes small, and cost is raised, which is a problem. This problem is particularly remarkable with the large-capacity model whose number of production lot is small.

The present invention was made in view of the above prior-art problems and an object thereof is to provide a refrigerator that can be manufactured inexpensively with a simple configuration and that is capable of highly efficient operation.

### Solution to Problem

The present invention is as defined in the appended independent claim. In order to achieve the above object, a refrigerator according to the present invention is a refrigerator provided with a refrigerant circuit in which a compressor, a condenser, a liquid container, a supercooling heat exchange portion, a throttle valve, and an evaporator connected in this order by piping, a return circuit that branches from a downstream position in a refrigerant flowing direction of the supercooling heat exchange portion in the refrigerant circuit and leads to an intermediate-pressure chamber of the compressor via the supercooling heat exchange portion, a supercooling throttle valve with a variable valve opening-degree that is disposed on a refrigerant inlet side of the supercooling heat exchange portion in the return circuit, operation state detecting means that detects operation state data in the refrigerant circuit, dryness-degree calculating means that calculates dryness-degree of the refrigerant on the outlet side of the supercooling heat exchange portion in the return circuit on the basis of the operation state data detected by the operation state detecting means and supercooling throttle valve control means that controls the valve opening-degree of the supercooling throttle valve so that the dryness-degree calculated by the dryness-degree calculating means gets close to the value of 1. Advantageous Effects of Invention

According to the refrigerator according to the present invention, the refrigerator is provided with the return circuit that branches from the downstream position in the refrigerant flowing direction of the supercooling heat exchange portion in the refrigerant circuit and leads to the intermediate-pressure chamber of the compressor via the supercooling heat exchange portion and the supercooling throttle valve with the variable valve opening-degree that is disposed on the refrigerant inlet side of the supercooling heat exchange portion in the return circuit, and the refrigerant dryness-degree on the outlet side of the supercooling heat exchange portion of the return circuit is calculated from the detected operation state data and the valve opening-degree of the supercooling throttle valve is controlled so that the calculated dryness-degree gets close to the value of 1, and thus, by adding supercooling to the intermediate pressure in the compressor, the coefficient of performance (COP) of the refrigerant circuit can be improved as compared with the case of addition of supercooling to the low pressure side (compressor suction side) as in the prior-art technology. Also, as compared with the prior-art technology, the type of pipelines and components of the throttle valves constituting the return circuit (injection circuit) and their control system can be reduced for one system, which can simplify the constitution and reduce manufacturing cost.

### Brief Description of Drawings

Fig. 1 is a refrigerant circuit configuration diagram of a refrigerator according to Embodiment 1 and Embodiment 2 of the present invention.
Fig. 2 is a diagram illustrating a refrigerator condensation unit of the refrigerator, in which (a) is a front view, (b) is a left side view, (c) is a right side view, and (d) is a plan view.
Fig. 3 is a flowchart illustrating a control procedure of the refrigerator.

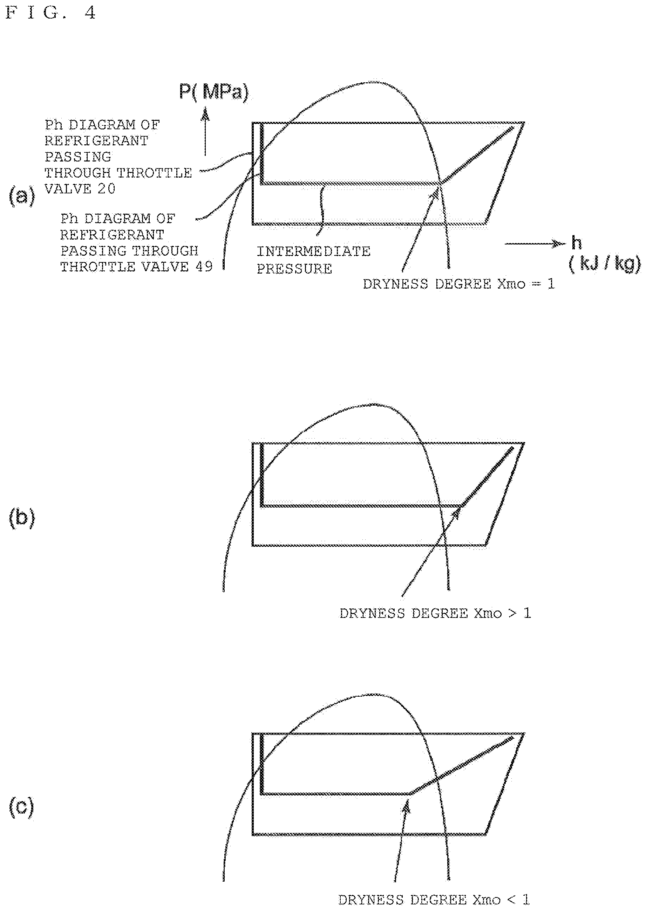

Fig. 4 is a diagram illustrating a refrigerating cycle operation of the refrigerator, (a) is a Mollier diagram illustrating a state in which dryness of a refrigerant on an outlet side of the refrigerant of the supercooling heat exchange portion in a return circuit is 1, (b) is a Mollier diagram illustrating a state in which dryness of the refrigerant on the outlet side of the refrigerant of the supercooling heat exchange portion in the return circuit is larger than 1, and (c) is a Mollier diagram illustrating a state in which dryness of the refrigerant on the outlet side of the refrigerant of the supercooling heat exchange portion in the return circuit is smaller than 1.

[Fig, 5] (a) is a front view of a refrigerator condensation unit according to Embodiment 3 of the present invention, and (b) is a front view of a refrigerator condensation unit according to Embodiment 4 of the present invention.

Description of Embodiments

Embodiment 1.

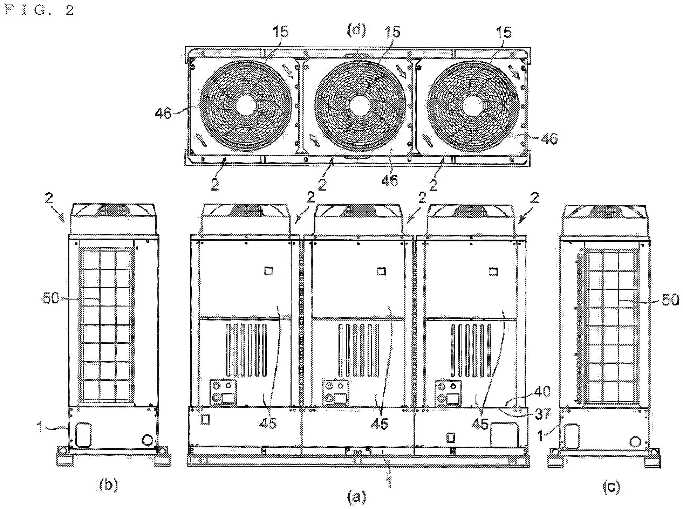

Fig, 1 is a refrigerant circuit configuration diagram of a refrigerator according to Embodiment 1 and Embodiment 2 of the present invention, and Fig. 2 is a diagram illustrating a refrigerator condensation unit of the refrigerator, in which (a) is a front view, (b) is a left side view, (c) is a right side view, and (d) is a plan view,

In each figure, the refrigerator according to this embodiment is provided with the refrigerator condensation unit composed of one liquid-collection-side module 1 and three compressor-side modules 2, 2, and 2 installed on an upper face 40 of the liquid-collection side module 1 and connected. All of these three compressor-side modules 2, 2, and 2 have a common structure compatible with one another.

Each of the compressor-side modules 2 is provided with a plate-shaped first base frame 37 at the bottom portion. On the first base frame 37, a compressor 3, an accumulator 27, an oil separator 4, an oil regulator 36, and a condenser 6 are disposed. In the compressor-side module 2, a first opening/closing valve 30 is disposed in the middle of a refrigerant pipeline 26 connected to the suction side of the accumulator 27. Between the compressor 3 and the first opening/closing valve 30 in the refrigerant pipeline 26, a first connecting member 33 that connects the refrigerant pipeline 26 is disposed in a separable fashion. The discharge side of the accumulator 27 is connected to the suction side of the compressor 3 by the refrigerant pipeline 48. The discharge side of the compressor 3 and the condenser 6 are connected by a pipeline via the oil separator 4. The refrigerant in the condenser 6 is cooled by air blown from an air blower 5. To the middle of a refrigerant pipeline 7 connected to the outlet side of the condenser 6, a second opening/closing valve 31 is disposed. On the upstream side of the second opening/closing valve 31 in the refrigerant pipeline 7, a second connecting member 34 that connects the refrigerant pipeline 7 capable of separation is disposed. To the compressor 3, the oil regulator 36 is connected by a pipeline. To this oil regulator 36, an oil equalizing pipeline 51 that connects the oil regulators 36 and 36 to each other of the other compressor-side modules 2 and 2 is connected.

In the middle of the oil equalizing pipeline 51, a fourth opening/closing valve 52 is disposed. Between the fourth opening/closing valve 52 and the oil regulator 36 in the oil equalizing pipeline 51, a fourth connecting member 53 that connects the oil equalizing pipeline 51 capable of separation is disposed. Also, a return circuit 29 that allows the refrigerant from the heat exchanger portion 28 for supercooling of the liquid-collection-side module 1, which will be described later in detail, to flow is connected to an intermediate-pressure chamber 3A of the compressor 3. in the middle of the return circuit 29, a third connecting member 35 that connects the return circuit 29 capable of separation is disposed. The configurations of the above-described first connecting member 33, the second connecting member 34, the third connecting member 35, and the fourth connecting member 53 are not particularly limited and embodied by a flare nut, here, for example.

The three compressor-side modules 2, 2, and 2 are arranged side by side in the horizontal direction, and the first base frame 37 is fixed onto the casing upper face 40 of the liquid-collection-side module 1 by a set screw or the like. The side faces of the right and left outer compressor-side modules 2 and 2 are covered by grid plates 50 and 50 with good ventilation. An opening above the air blower 5 in each compressor-side module 2 is covered by a bell mouse plate 46. On the other hand, on a bottom plate of the liquid-collection-side module 1, a liquid container 10 that contains liquid refrigerants from the three compressor-side modules 2, 2, and 2 is disposed.

Refrigerant pipelines 7, 7, and 7 leading the condensers 6, 6, and 6 of the three compressor-side modules 2, 2, and 2 are connected to the refrigerant pipeline 9 via two merging pipe portions 8 and 8, which are three-way pipes. This refrigerant pipeline 9 is connected to the liquid container 10 of the liquid-collection-side module 1. The refrigerant pipelines 26, 26, and 26 connected to the accumulators 27, 27, and 27, respectively, are connected to the refrigerant pipeline 24 via two distribution pipe portions 25 and 25, which are three-way pipes. The refrigerant pipeline 11 from the liquid container 10 is connected to three parallel pipelines 13, 13, and 13 corresponding to the number of the compressor-side modules 2 via distribution pipelines 12 and 12 and further connected to a refrigerant pipeline 15 via merging pipe portions 14 and 14. In the middles of the parallel pipelines 13, 13, and 13, the supercooling heat exchange portions 28, 28, and 28 are provided. Each of the supercooling heat exchange portion 28 exchanges heat between the refrigerant in the return circuit 29 and the refrigerant in the parallel pipeline 13. On the refrigerant inlet side of the supercooling heat exchange portion 28 in the return circuit 29, a supercooling throttle valve 49 (LEV) with a variable valve opening-degree is disposed.

In this supercooling heat exchange portion 28, a supercooling-degree of the refrigerant in the parallel pipeline 13 is increased by the refrigerant throttled by a supercooling throttle valve 49 of the return circuit 29, and the refrigerant in the return circuit 29 is returned to the compressor 3. Between a branch portion from the parallel pipeline 13 in the return circuit 29 and the supercooling heat exchange portion 28, a third opening/closing valve 32 is provided. Then, the refrigerant pipeline 15 from the merging pipe portion 14 is connected to a refrigerant pipeline 17.

The above refrigerator constitutes a refrigerant circuit by being connected to the throttle valve 20 and the evaporator 21 by a pipeline, in this case, the refrigerant pipeline 17 of the refrigerator is connected by a refrigerant pipeline 19 and a connecting pipe portion 18 connected to the throttle valve 20. The refrigerant pipeline 24 of the refrigerator is connected to the refrigerant pipeline 22 from the evaporator 21 by a connecting pipe portion 23. In the refrigerant pipeline on the outlet side of the oil separator 4, a high-pressure sensor (an example of condensation temperature detecting means) 65 that detects a refrigerant condensation temperature is disposed. The refrigerant evaporation temperature is calculated by converting the high-pressure side refrigerant pressure detected by the high-pressure sensor 65 to a saturated temperature. In the refrigerant pipeline 48 on the suction side of the compressor 3, a low-pressure sensor (an example of evaporation temperature detecting means) 66 that detects a refrigerant evaporation temperature is disposed. The refrigerant evaporation temperature is calculated by converting a refrigerant pressure on the low-pressure side detected by the low-pressure sensor 66 to a saturated temperature, In the parallel pipeline 13 on the outlet side of the supercooling heat exchange portion 28 in the refrigerant circuit, a temperature sensor (an example of liquid-refrigerant temperature detecting means) 67 that detects a liquid-refrigerant temperature is disposed. On the suction side of the compressor 3 in the refrigerant circuit, a temperature sensor 70 is disposed.

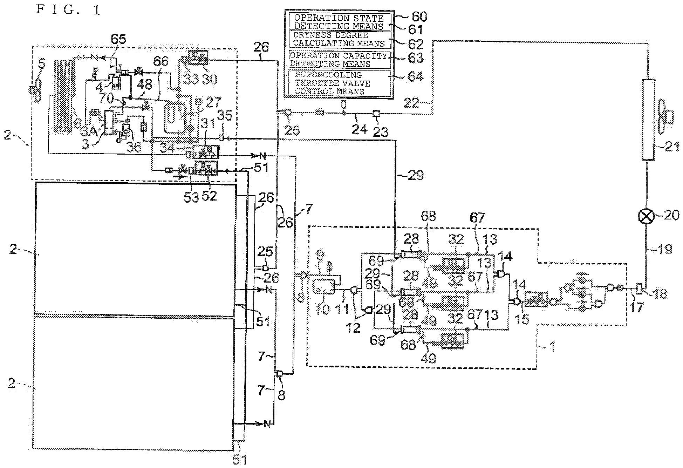

Fig. 1 shows only a detailed configuration of one of the compressor-side modules 2, while the detailed configurations of the remaining two compressor-side modules 2 are omitted, but the detailed configurations of these remaining two compressor-side modules 2 are the same as that of the illustrated compressor-side module 2,

Also, the refrigerator of this embodiment is provided with a controller 60. The controller 60 is embodied by a general-purpose micro-processing unit MPU, for example, and has a function of operation state detecting means 61 that detects operation state data in the refrigerant circuit, a function of dryness-degree calculating means 62 that calculates dryness-degree Xmo of the refrigerant on the outlet side of the supercooling heat exchange portion 28 of the return circuit 29 from the operation state data detected by the operation state detecting means 61, a function of operation capacity detecting means 61 that detects a driving frequency (corresponding to a driving capacity) outputted to an inverter device (not shown) that drives a motor of the compressor 3 with variable capacity, and a function of supercooling throttle valve control means 64 that controls a valve opening-degree of the supercooling throttle valve 49 so that the dryness-degree Xmo calculated by the dryness-degree calculating means 62 gets close to the value of 1, That is, the operation state detecting means in the present invention includes the functions of the operation state detecting means 61 of the controller 60, the high-pressure sensor 65, the low-pressure sensor 66, and the temperature sensor 67.

A refrigerant flow operation of the refrigerator constituted as above will be described. In each compressor-side module 2, a high-temperature high-pressure gas refrigerant discharged from the compressor 3 passes through the oil separator 4, is cooled by the condenser 6, turns into a liquid refrigerant and flows through the refrigerant pipeline 7. The liquid refrigerants from the respective refrigerant pipelines 7 merge in the merging pipe portions 8 and 8 and flow through the refrigerant pipeline 9 into the liquid container 10. The liquid refrigerant from the liquid container 10 passes through the refrigerant pipeline 11, is distributed in the distribution pipelines 12 and 12 into the parallel pipelines 13, 13, and 13 and flows into the supercooling heat exchange portions 28, 28, and 28, respectively. The liquid refrigerant in the parallel pipeline 13 in each supercooling heat exchange portion 28 flows into the return circuit 29 on the downstream side, is further cooled by the refrigerant having been throttled by the supercooling throttle valve 49 and has its supercooling-degree increased. On the other hand, the liquid refrigerants of the refrigerant circuit having passed through the parallel pipelines 13, 13, and 13 merge in the merging pipe portions 14 and 14, flow through the refrigerant pipeline 15 and reach the refrigerant pipeline 17. The liquid refrigerant of the refrigerant pipeline 17 extends from the refrigerant pipeline 19 to the throttle valve 20. The refrigerant is throttled in the throttle valve 20, becomes a gas-liquid two-phase refrigerant and flows into the evaporator 21. The refrigerant receives heat in the evaporator 21 and becomes a gas refrigerant and flows through the refrigerant pipeline 22. The gas refrigerant in the refrigerant pipeline 22 flows into the refrigerant pipeline 24 of the refrigerator and is distributed by the distribution pipe portions 25 and 25 into the refrigerant pipelines 26, 26, and 26 leading to the compressor-side modules 2, 2, and 2, Then, the gas refrigerant flowing through the refrigerant pipeline 26 of each compressor-side module 2 flows into the respective accumulators 27 and returns to the suction side of the compressor 3 via the refrigerant pipeline 48. The above refrigerating cycle operation is performed repeatedly.

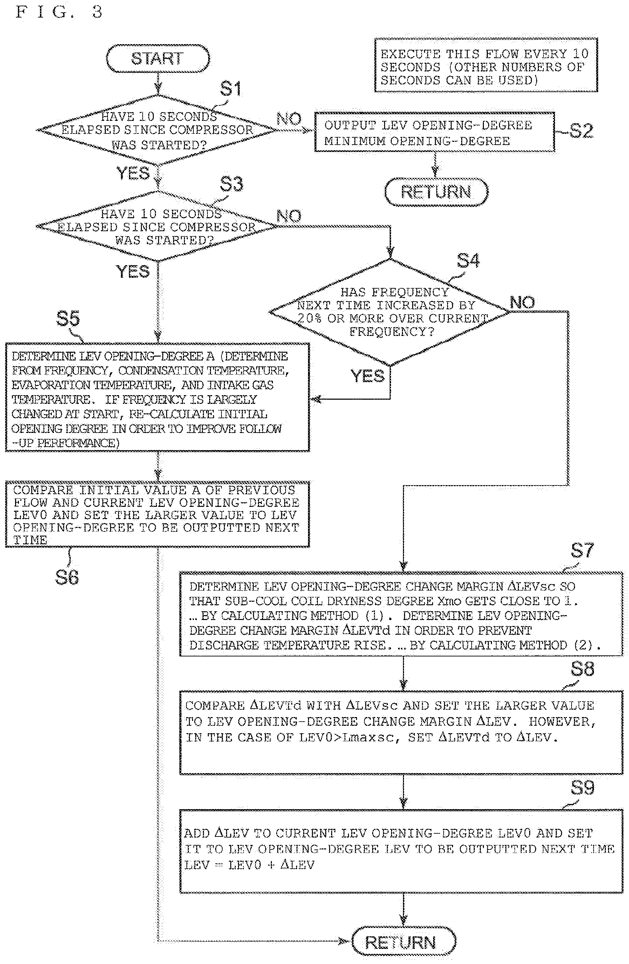

Here, a control operation by the controller 60 of this refrigerator will be described by referring to a flowchart in Fig. 3.

First, at start of the control operation, the controller 60 determines at Step S1 whether or not 10 seconds have elapsed since the compressor 3 was started. If 10 seconds have not elapsed yet (NO at the same Step), as an instruction opening-degree to be outputted to a driver of the supercooling throttle valve (LEV) 49, a lowest opening-degree of the supercooling throttle valve 49 is outputted (Step S2), and the routine returns to the start of the control operation. On the other hand, if exactly 10 seconds have elapsed since the start (YES at Step S1), it is determined at Step S3 whether or not 10 seconds have elapsed since the compressor 3 was started. If 10 seconds or more have elapsed since the start (NO), at Step S4, it is determined whether or not next driving frequency for an inverter device determined by the calculation is to be increased by 20% and more over the driving frequency currently applied. If the next driving frequency is scheduled to be increased by 20% and more over the current driving frequency (YES), the processing goes to Step S5. If the driving frequency is to be largely changed, an initial opening-degree is re-calculated in order to improve follow-up performances. If it is exactly 10 seconds after the start of the compressor 3 at Step S3 (YES at the same Step), the processing goes to Step S5.

At Step S5, the controller 60 determines an LEV opening-degree A of the supercooling throttle valve 49 on the basis of the current operation frequency detected by the operation capacity detecting means 64, the condensation temperature obtained by the high-pressure sensor 65, the evaporation temperature obtained by the low-pressure sensor 66, and the sucked gas temperature detected by the temperature sensor 70. At the subsequent Step 6, the opening initial value A of the previous processing flow is compared with the current opening-degree LEV0, and the larger value is used as the opening-degree value to be outputted to the supercooling throttle valve 49 next time (Step S6), and the routine returns to the control operation start.

On the other hand, at Step S4, if the operation frequency to be determined next time is not to be increased by 20% or more over the current operation frequency (NO at Step S4), the controller 60 calculates an opening-degree change margin ΔLEVsc at Step S7 so that the refrigerant dryness Xmo on the outlet side of the supercooling heat exchanger 28 gets close to 1. The calculation method at this time is as described in the following calculating method (1):
Calculation method (1): "Method of determining opening-degree change margin ΔLEVsc by refrigerant dryness-degree on the outlet side of the supercooling heat exchanger 28"

   (A) The controller 60 estimates the current dryness-degree Xmo from the detected current opening-degree LEV0, the operation frequency of the inverter device of the compressor 3, the condensation temperature, the evaporation temperature, and the liquid-pipeline temperature.

This dryness-degree Xmo is calculated in advance from experimental values as a function of the operation frequency, the condensation temperature, the evaporation temperature, and the liquid pipeline temperature. The calculating method is as follows, for example:

$$Xmo = \alpha \times \text{operation frequency} + \beta \times \text{condensation temperature} + \gamma \times \text{evaporation temperature} + \mu \times \text{liquid pipeline temperature}$$

where $\alpha$, $\beta$, $\gamma$, and $\mu$ are constants.

Then, the opening-degree change margin ΔLEVsc is acquired by the following equation, for example:

$$\Delta LEVsc = B \times (Xmo - Xmom)$$

Here, B is a coefficient acquired from experiments or the like and Xmom is target dryness-degree (=1).

As obvious from the above equation, if the current dryness-degree Xmo is far away from the target dryness-degree Xmom, the absolute value of the opening-degree change margin ΔLEVsc becomes larger, while if the value gets close to the target dryness-degree Xmom, the absolute value of the opening-degree change margin ΔLEVsc becomes small.

At this Step S7, the controller 60 further calculates the LEV opening-degree change margin ΔLEVTd for preventing discharge temperature rise. The calculation method at this time is the following calculation method (2):
Calculation method (2); "Method of determining opening-degree change margin ΔLEVTd for preventing a rise in a discharge temperature"

In this method, if a discharge temperature which should not be exceeded is set at 120°C, the opening-degree change margin ΔLEVTd is acquired by the following equation, for example:

$$\Delta LEVTd = C/(120 - Td0)$$

where, C is a coefficient acquired from experiments and the like, and Td0 is a detected value of the discharge temperature.

As is known from the above equation, as the discharge temperature Td0 gets dose to 120°C, the opening-degree ΔLEVTd becomes larger.

At the subsequent Step S8, the controller 60 compares the respectively calculated opening-degree ΔLEVTd with the opening-degree $\Delta LEVsc$ and the larger value is outputted as an instruction value of the opening-degree change margin $\Delta LEV$ to the driver of the supercooling throttle valve 49. However, in the case of the opening-degree LEV0 > opening-degree Lmaxsc, the opening-degree change margin $\Delta LEVTd$ is outputted as the opening-degree change margin $\Delta LEV$. At Step S9, the controller 60 sets the value obtained by adding the opening-degree change margin $\Delta LEV$ to the current opening-degree LEV0 as the opening-degree LEV to be outputted next time.

$$LEV = LEV0 + \Delta LEV$$

The control mode described above aims that the discharge temperature of the compressor 3 is brought to an allowable value or less and that a supercooling amount of a condensed liquid refrigerant is controlled in order to realize an operation with good refrigerating efficiency. That is, after comparing the valve opening-degree required for the supercooling throttle valve 49 in order to keep the discharge temperature of the compressor 3 at the allowable value or less and the valve opening-degree of the supercooling throttle valve 49 in order to realize an operation with required and sufficient supercooling-degree and the best efficiency, the larger opening-degree is outputted to the supercooling throttle valve 49. Here, the most efficient operation is an operation when the dryness-degree Xmo of the refrigerant on the outlet side of the supercooling heat exchanger 28 in the return circuit 29 becomes 1 (See Fig. 4(a)). On the other hand, if the discharge temperature needs to be lowered due to a high compression ratio condition or the like, the operation becomes wet control with the dryness-degree Xmo less than 1 (See Fig. 4(c)), and then although the refrigerating efficiency is slightly lowered, reliability can be maintained by lowering the discharge temperature to the allowable temperature or less. Also, in a case of an operation with a low discharge temperature, as setting priority on efficiency, the LEV opening-degree is controlled to be a target that is the dryness-degree Xmo = 1.

As described above, in the refrigerator of Embodiment 1, from operation state data such as the operation frequency detected by the operation state detecting means 61 of the controller 60, the condensation temperature by the high-pressure sensor 65, the evaporation temperature by the low-pressure sensor 66, and the intake gas refrigerant temperature from the temperature sensor 70, the dryness-degree Xmo of the refrigerant on the outlet side of the supercooling heat exchange portion 28 of the return circuit 29 leading to the intermediate-pressure chamber 3A of the compressor 3 is calculated, and the valve opening-degree of the supercooling throttle valve 49 is controlled so that the calculated dryness-degree gets close to the value of 1, and thus, supercooling can be added in the intermediate pressure in the compressor 3. As a result, coefficient of performance (COP) can be more improved than the configuration in which supercooling is added to the low-pressure side of the refrigerant circuit as in the prior-art technology. Also, as compared with the prior-art technologies, components of the pipelines and a throttle valve which constitute an injection circuit and a component such as a control system can be removed as one system, which simplifies the configuration and can reduce manufacturing cost.

Also, according to this refrigerator, three compressor-side modules 2 having common configurations are used, and their first base frames 37 are connected to the second base frames 40 of the liquid-collection-side modules 1, That is, by determining the number of the compressor-side modules 2 to be used as appropriate and by connecting the determined number of compressor-side modules 2 to the liquid-collection-side modules 1, a refrigerator according to a desired refrigerator capacity can be manufactured. Also, since the compressor-side module 2 has a common configuration, a production lot can be increased, which enables reduction of manufacturing cost of a refrigerator. Moreover, since a set of the return circuit 29, the supercooling heat exchange portion 28, and the supercooling throttle valve 49 disposed in each of the parallel pipelines 13, 13, and 13 has a common configuration, the production lot can be also increased by them, which enables reduction in manufacturing cost of the refrigerator.

Also, since the first connecting members 33, 33, and 33, the second connecting members 34, 34, and 34, the third connecting members 35, 35, and 35, and the fourth connecting members 53, 53, and 53 are provided, by operating these connecting members 33, 34, 35, and 53, the refrigerant pipeline 26, the refrigerant pipeline 7, the return circuit 29, and the oil equalizing pipeline 51 can be divided in the middle, respectively, and maintenance and repair can be achieved by removing the compressor-side module 2 from the entire refrigerator condensation unit.

In a refrigerator according to Embodiment 2, as shown in Fig. 1, on the refrigerant inlet side of the supercooling heat exchange portion 28 in each return circuit 29, a temperature sensor (an example of a supercooling-inlet-side refrigerant temperature detecting means) 68 that detects a refrigerant temperature of that portion is disposed, respectively. Also, on the refrigerant outlet side of the supercooling heat exchange portion 28 in each return circuit 29, a temperature sensor (an example of supercooling outlet side refrigerant temperature detecting means) 69 that detects a refrigerant temperature of that portion is disposed, respectively.

Control of Embodiment 2 is executed by the controller 60 used in Embodiment 1 in accordance with a control flow in Fig. 3. However, the calculating method (1) at Step S7 is different from that of Embodiment 1, and the following method (B) is used instead of (A) in Embodiment 1.

(B) The controller 60 controls the valve opening-degree of the supercooling valve 49 so that a difference between the detected temperature of the temperature sensor 68 on the inlet side of the supercooling heat exchanger 28 in the return circuit 29 and the detected temperature of the temperature sensor 69 on the outlet side of the supercooling heat exchanger 28 becomes a predetermined temperature difference (5K, for example). That is, the control in which the opening-degree change margin ΔLEVsc is calculated and outputted such that the dryness-degree Xmo gets close to 1 can be executed by using the detected temperature of the temperature sensor 68 on the inlet side of the supercooling heat exchanger 28 and the detected temperature of the temperature sensor 69 on the outlet side of the supercooling heat exchanger 28. Since the dryness-degree Xmo becomes slightly larger than 1 with the above control (See Fig. 4(b)), the refrigerating efficiency becomes somewhat lower than that in the control in (A), but it does not disturbs the operation.

Embodiment 3.

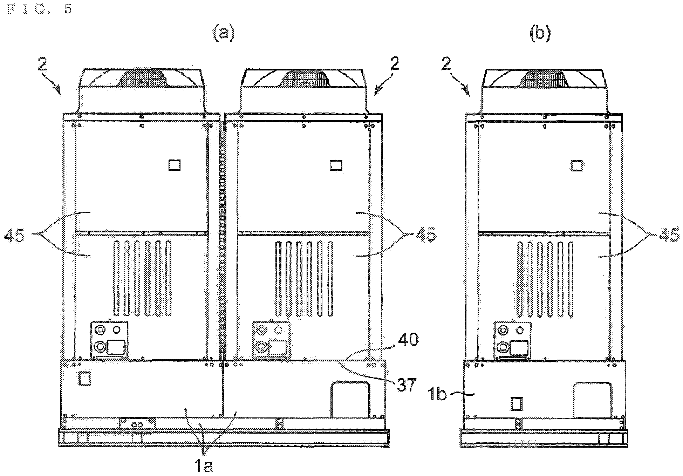

In Embodiment 1 and Embodiment 2, the refrigerator in which the three compressor-side modules 2, 2, and 2 are connected onto the upper face of the liquid-collection-side module 1, but the present invention is not limited by that. For example, as shown in Fig. 5(a), a refrigerator in which the two compressor-side modules 2 and 2 are connected to the upper face of a liquid-collection-side module 1a, which is smaller than the liquid-collection-side module 1 in the horizontal direction, is also included in the present invention.

Embodiment 4.

Alternatively, as shown in Fig. 5(b), a refrigerator in which the one compressor-side module 2 is connected onto the upper face of a liquid-collection-side module 1b, which is further smaller than the liquid-collection-side module 1a, is also included in the present invention.

Reference Signs List

1 liquid-collection-side module, 2 compressor-side module, 3 compressor, 3A intermediate-pressure chamber, 6 condenser, 10 liquid container, 13 parallel pipeline, 17 refrigerant pipeline, 18 connecting pipe portion, 19 refrigerant pipeline, 20 throttle valve, 21 evaporator, 28 supercooling heat exchange portion, 29 return circuit, 49 supercooling throttle valve, 60 controller, 61 operation state detecting means, 62 dryness-degree calculating means, 63 operation capacity detecting means, 64 supercooling throttle valve control means, 65 high-pressure sensor (condensation temperature detecting means), 66 low-pressure sensor (evaporation temperature detecting means), 67 temperature sensor (liquid-refrigerant temperature detecting means), 68 temperature sensor (supercooling-inlet-side refrigerant temperature detecting means), 69 temperature sensor (supercooling-outlet-side refrigerant temperature detecting means).

**Claims**

1. A refrigerator that has a refrigerant circuit in which a plurality of compressors (3), a plurality of condensers (6), a liquid container (10), a plurality of supercooling heat exchange portions (28), a throttle valve (20), and an evaporator (21) are connected in this order by piping; a plurality of return circuits (29), wherein a return circuit (29) branches from a downstream position in a refrigerant flowing direction of one of said plurality of supercooling heat exchange portions (28) in said refrigerant circuit and leads to an intermediate-pressure chamber (3A) of one of said plurality of compressors (3) via one of said plurality of supercooling heat exchange portions (28); a plurality of supercooling throttle valves (49) with a variable valve opening-degree that are disposed on refrigerant inlet sides of said plurality of supercooling heat exchange portions (28) in said plurality of return circuits (29); and operation state detecting means (61) that is adapted to detect operation state data in said refrigerant circuit, comprising:

   dryness-degree calculating means (62) that is configured to calculate a dryness-degree of the refrigerant on the outlet sides of said plurality of supercooling heat exchange portions (28) in said plurality of return circuits (29) on the basis of the operation state data detected by said operation state detecting means (61); and supercooling throttle valve control means (64) that is configured to control the valve opening-degree of said plurality of supercooling throttle valves (49) so that the dryness-degree calculated by said dryness-degree calculating means (62) gets close to a predetermined value of 1;

   wherein the refrigerator comprises:

   a plurality of common compressor-side modules (2) in each of which one of the plurality of the compressors (3) and one of the plurality of the condensers (6) are disposed;
a liquid-collection-side module (1) in which said liquid container (10) to which each of said plurality of compressor-side modules (2) is connected and which contains a liquid refrigerant from said plurality of condensers (6) of said plurality of compressor-side modules (2) is disposed;
a plurality of parallel pipelines (13) in which the liquid refrigerant from said liquid container (10) is distributed in parallel into the number corresponding to said compressor-side modules (2);
a common set composed of one of said plurality of return circuits (29), one of said plurality of supercooling heat exchange portions (28), and one of said plurality of supercooling throttle valves (49) disposed in each of said parallel pipelines (13);
said throttle valve (20) that is adapted to throttle the refrigerant merged from said plurality of parallel pipelines (13); and
said evaporator (21) that is adapted to evaporate the refrigerant from said throttle valve (20), connected in this order by piping so as to constitute a refrigerant circuit.

2. The refrigerator of claim 1, wherein
the operation state detecting means (61) includes:

operation capacity detecting means (63) that is adapted to detect an operation capacity of said plurality of compressors (3) with variable capacity;
condensation temperature detecting means (65) that is adapted to detect a refrigerant condensation temperature in said plurality of condensers (6);
evaporation temperature detecting means (66) that is adapted to detect a refrigerant evaporation temperature in the evaporator (21); and
liquid-refrigerant temperature detecting means (67) that is adapted to detect a refrigerant temperature on the refrigerant outlet sides of said plurality of supercooling heat exchange portions (28) in said refrigerant circuit.

3. The refrigerator of claim 1, wherein
the operation state detecting means (61) includes:

supercooling-inlet-side refrigerant temperature detecting means (68) that is adapted to detect a refrigerant temperature on the refrigerant inlet sides of said supercooling heat exchange portions (28) in said plurality of return circuits (29); and
supercooling-outlet-side refrigerant temperature detecting means (69) that is adapted to detect a refrigerant temperature on the refrigerant outlet sides of said plurality of supercooling heat exchange portions (28) in said plurality of return circuits (29).

**Patentansprüche**

1. Kältegerät, aufweisend:

einen Kältemittelkreislauf, in dem eine Vielzahl von Verdichtern (3), eine Vielzahl von Kondensatoren (6), ein Flüssigkeitsbehälter (10), eine Vielzahl von Unterkühlungswärmetauscherabschnitten (28), ein Drosselventil (20) und ein Verdampfer (21) in dieser Reihenfolge durch eine Leitung verbunden sind;
eine Vielzahl von Rückführungsverbindungen (29), wobei
eine Rückführungsverbindung (29) von einer in einer Kältemittelströmungsrichtung stromabwärtigen Position eines der Vielzahl von Unterkühlungswärmetauscherabschnitten (28) im Kältemittelkreislauf abzweigt und zu einer Zwischendruckkammer (3A) eines von der Vielzahl von Verdichtern (3) über einen der Vielzahl von Unterkühlungswärmetauscherabschnitten (28) führt;
eine Vielzahl von Unterkühlungsdrosselventilen (49) mit einem variablen Ventilöffnungsgrad, die an Kältemitteleinlassseiten der Vielzahl von Unterkühlungswärmetauscherabschnitten (28) in der Vielzahl von Rückführungsverbindungen (29) angeordnet sind; und
ein Betriebszustandserfassungsmittel (61), das angepasst ist, Betriebszustandsdaten im Kältemittelkreislauf zu erfassen, umfassend:

ein Trockenheitsgradberechnungsmittel (62), das eingerichtet ist, einen Trockenheitsgrad des Kältemittels an den Auslassseiten der Vielzahl von Unterkühlungswärmetauscherabschnitten (28) in der Vielzahl von Rückführungsverbindungen (29) zu berechnen auf der Grundlage der durch das Betriebszustandserfassungsmittel (61) erfassten Betriebszustandsdaten; und

ein Unterkühlungsdrosselventilsteuermittel (64), das eingerichtet ist, den Ventilöffnungsgrad der Vielzahl von Unterkühlungsdrosselventilen (49) zu steuern, so dass der durch das Trockenheitsgradberechnungsmittel (62) berechnete Trockenheitsgrad einem vorherbestimmten Wert von 1 nahe kommt;

wobei das Kältegerät umfasst:

eine Vielzahl von gemeinsamen verdichterseitigen Modulen (2), in denen jeweils einer der Vielzahl der Verdichter (3) und einer der Vielzahl der Kondensatoren (6) angeordnet sind;

ein flüssigkeitssammelseitiges Modul (1), in dem der Flüssigkeitsbehälter (10), mit dem jedes der Vielzahl von verdichterseitigen Modulen (2) verbunden ist und der ein flüssiges Kältemittel von der Vielzahl von Kondensatoren (6) der Vielzahl von verdichterseitigen Modulen (2) enthält, angeordnet ist;

eine Vielzahl von parallelen Leitungen (13), in denen das flüssige Kältemittel aus dem Flüssigkeitsbehälter (10) parallel in die Anzahl aufgeteilt ist, die den verdichterseitigen Modulen (2) entspricht;

eine gemeinsame Gruppe, die aus einer der Vielzahl von Rückführungsverbindungen (29), einem der Vielzahl von Unterkühlungswärmetauscherabschnitten (28) und einem der Vielzahl von Unterkühlungsdrosselventilen (49), die in jeder der parallelen Leitungen (13) angeordnet sind, gebildet ist;

das Drosselventil (20), das ausgelegt ist, das aus der Vielzahl von parallelen Leitungen (13) zusammengeführte Kältemittel zu drosseln, und

den Verdampfer (21), der ausgelegt ist, das Kältemittel aus dem Drosselventil (20) zu verdampfen, die in dieser Reihenfolge durch eine Leitung verbunden sind, um einen Kältemittelkreislauf zu bilden.

2. Kältegerät nach Anspruch 1, wobei
das Betriebszustandserfassungsmittel (61) aufweist:

ein Betriebskapazitätserfassungsmittel (63), das ausgelegt ist, eine Betriebskapazität der Vielzahl von Verdichtern (3) mit variabler Kapazität zu erfassen;

ein Kondensationstemperaturerfassungsmittel (65), das ausgelegt ist, eine Kältemittelkondensationstemperatur in der Vielzahl von Kondensatoren (6) zu erfassen;

ein Verdampfungstemperaturerfassungsmittel (66), das ausgelegt ist, eine Kältemittelverdampfungstemperatur im Verdampfer (21) zu erfassen; und

ein Flüssigkältemittel-Temperaturerfassungsmittel (67), das ausgelegt ist, eine Kältemitteltemperatur an den Kältemittelauslassseiten der Vielzahl von Unterkühlungswärmetauscherabschnitten (28) im Kältemittelkreislauf zu erfassen.

3. Kältegerät nach Anspruch 1, wobei
das Betriebszustandserfassungsmittel (61) aufweist:

ein unterkühlungseinlassseitiges Kältemitteltemperaturerfassungsmittel (68), das ausgelegt ist, eine Kältemitteltemperatur an den Kältemitteleinlassseiten der Unterkühlungswärmetauscherabschnitte (28) in der Vielzahl von Rückführungsverbindungen (29) zu erfassen; und

ein unterkühlungsauslassseitiges Kältemitteltemperaturerfassungsmittel (69), das ausgelegt ist, eine Kältemitteltemperatur an den Kältemittelauslasseiten der Vielzahl von Unterkühlungswärmetauscherabschnitten (28) in der Vielzahl von Rückführungsverbindungen (29) zu erfassen.

**Revendications**

1. Réfrigérateur comprenant

un circuit réfrigérant dans lequel une pluralité de compresseurs (3), une pluralité de condenseurs (6), un réservoir de liquide (10), une pluralité de parties d'échange de chaleur de super-refroidissement (28), un robinet d'étranglement (20) et un évaporateur (21) sont raccordés dans cet ordre par tuyauterie ;

une pluralité de circuits de retour (29), dans laquelle un circuit de retour (29) se branche à partir d'une position en aval dans une direction d'écoulement de frigorigène d'une partie d'échange de chaleur parmi ladite pluralité de parties d'échange de chaleur de super-refroidissement (28) dans ledit circuit réfrigérant et conduit à une chambre de pression intermédiaire (3A) d'un compresseur parmi ladite pluralité de compresseurs (3) via une partie d'échange de chaleur parmi ladite pluralité de parties d'échange de chaleur de super-refroidissement (28) ;

une pluralité de robinets d'étranglement de super-refroidissement (49) avec un degré d'ouverture de robinet variable qui sont disposés sur des côtés d'entrée de frigorigène de ladite pluralité de parties d'échange de chaleur de super-refroidissement (28) dans ladite pluralité de circuits de retour (29) ; et

un moyen de détection d'état de fonctionnement (61) qui est adapté pour détecter des données d'état de fonctionnement dans ledit circuit réfrigérant, comprenant :

un moyen de calcul de degré de siccité (62) qui est configuré pour calculer un degré de siccité du frigorigène dans les côtés de sortie de ladite pluralité de parties d'échange de chaleur de super-refroidissement (28) dans ladite pluralité de circuits de retour (29) sur la base des données d'état de fonctionnement détectées par ledit moyen de détection d'état de fonctionnement (61) ; et

un moyen de commande de robinet d'étranglement de super-refroidissement (64) qui est configuré pour commander le degré d'ouverture de robinet de ladite pluralité de robinets d'étranglement de super-refroidissement (49) de telle sorte que le degré de siccité calculé par ledit moyen de calcul de degré de siccité (62) approche d'une valeur prédéterminée égale à 1 ;

le réfrigérateur comprenant :

une pluralité de modules communs côté compresseur (2) dans chacun desquels sont disposés un compresseur de la pluralité des compresseurs (3) et un condenseur de la pluralité des condenseurs (6) ;

un module côté collecte de liquide (1) dans lequel est disposé ledit réservoir de liquide (10) auquel chaque module de ladite pluralité de modules côté compresseur (2) est raccordé et qui contient un frigorigène liquide provenant de ladite pluralité de condenseurs (6) de ladite pluralité de modules côté compresseur (2) ;

une pluralité de conduites parallèles (13) dans laquelle le frigorigène liquide provenant dudit réservoir de liquide (10) est distribué en parallèle dans le nombre correspondant auxdits modules côté compresseur (2) ;

un ensemble commun composé d'un circuit parmi ladite pluralité de circuits de retour (29), d'une partie d'échange parmi ladite pluralité de parties d'échange de chaleur de super-refroidissement (28) et d'un robinet parmi ladite pluralité de robinets d'étranglement de super-refroidissement (49) disposés dans chacune desdites conduites (13) ;

ledit robinet d'étranglement (20) qui est adapté pour étrangler ledit frigorigène réuni provenant de ladite pluralité de conduites parallèles (13) ; et

ledit évaporateur (21) qui est adapté pour assurer l'évaporation du frigorigène provenant dudit robinet d'étranglement (20), raccordés dans cet ordre par tuyauterie de sorte à constituer un circuit réfrigérant.

2. Réfrigérateur selon la revendication 1, dans lequel
le moyen de détection d'état de fonctionnement (61) inclut :

un moyen de détection de capacité de fonctionnement (63) qui est adapté pour détecter une capacité de fonctionnement de ladite pluralité de compresseurs (3) ayant une capacité variable ;

un moyen de détection de température de condensation (65) qui est adapté pour détecter une température de condensation de frigorigène dans ladite pluralité de condenseurs (6) ;

un moyen de détection de température d'évaporation (66) qui est adapté pour détecter une température d'évaporation de frigorigène dans l'évaporateur (21) ; et

un moyen de détection de température de frigorigène liquide (67) qui est adapté pour détecter une température de frigorigène sur les côtés de sortie du frigorigène de ladite pluralité de parties d'échange de chaleur de super-refroidissement (28) dans ledit circuit réfrigérant.

3. Réfrigérateur selon la revendication 1, dans lequel
le moyen de détection d'état de fonctionnement (61) comprend :

un moyen de détection de température de frigorigène côté entrée de super-refroidissement (68) qui est adapté pour détecter une température de frigorigène sur les côtés d'entrée de frigorigène desdites parties d'échange de chaleur de super-refroidissement (28) dans ladite pluralité de circuits de retour (29) ; et

un moyen de détection de température de frigorigène côté sortie de super-refroidissement (69) qui est adapté pour détecter une température de frigorigène sur les côtés de sortie de frigorigène de ladite pluralité de parties d'échange de chaleur de super-refroidissement (28) dans ladite pluralité de circuits de retour (29).

FIG. 1

| OPERATION STATE DETECTING MEANS | ～60 |
| DRYNESS DEGREE CALCULATING MEANS | ～61 |
| | ～62 |
| OPERATION CAPACITY DETECTING MEANS | ～63 |
| SUPERCOOLING THROTTLE VALVE CONTROL MEANS | ～64 |

F I G. 2

FIG. 3

```
                    ┌──────────┐          ┌──────────────────────────────────┐
                    │  START   │          │ EXECUTE THIS FLOW EVERY 10       │
                    └────┬─────┘          │ SECONDS (OTHER NUMBERS OF         │
                         │                │ SECONDS CAN BE USED)              │
                         ▼        S1      └──────────────────────────────────┘
                    ╱──────────╲
                   ╱ HAVE 10 SECONDS╲  NO   ┌─────────────────────────────┐
                  ╱ ELAPSED SINCE COMPRESSOR╲───►│ OUTPUT LEV OPENING-DEGREE   │  S2
                   ╲  WAS STARTED? ╱          │ MINIMUM OPENING-DEGREE      │
                    ╲──────────╱              └─────────────┬───────────────┘
                       YES│   S3                            │
                          ▼                                 ▼
                    ╱──────────╲                      ┌──────────┐
                   ╱ HAVE 10 SECONDS╲  NO             │  RETURN  │
                  ╱ ELAPSED SINCE COMPRESSOR╲────┐     └──────────┘
                   ╲  WAS STARTED? ╱          │
                    ╲──────────╱              │
```

**S1** HAVE 10 SECONDS ELAPSED SINCE COMPRESSOR WAS STARTED? — NO → **S2** OUTPUT LEV OPENING-DEGREE MINIMUM OPENING-DEGREE → RETURN

**S3** HAVE 10 SECONDS ELAPSED SINCE COMPRESSOR WAS STARTED? — YES

**S4** HAS FREQUENCY NEXT TIME INCREASED BY 20% OR MORE OVER CURRENT FREQUENCY? — YES / NO

**S5** DETERMINE LEV OPENING-DEGREE A (DETERMINE FROM FREQUENCY, CONDENSATION TEMPERATURE, EVAPORATION TEMPERATURE, AND INTAKE GAS TEMPERATURE. IF FREQUENCY IS LARGELY CHANGED AT START, RE-CALCULATE INITIAL OPENING DEGREE IN ORDER TO IMPROVE FOLLOW-UP PERFORMANCE)

**S6** COMPARE INITIAL VALUE A OF PREVIOUS FLOW AND CURRENT LEV OPENING-DEGREE LEV0 AND SET THE LARGER VALUE TO LEV OPENING-DEGREE TO BE OUTPUTTED NEXT TIME

**S7** DETERMINE LEV OPENING-DEGREE CHANGE MARGIN $\Delta LEVsc$ SO THAT SUB-COOL COIL DRYNESS DEGREE $Xmo$ GETS CLOSE TO 1. ... BY CALCULATING METHOD (1). DETERMINE LEV OPENING-DEGREE CHANGE MARGIN $\Delta LEVTd$ IN ORDER TO PREVENT DISCHARGE TEMPERATURE RISE. ... BY CALCULATING METHOD (2).

**S8** COMPARE $\Delta LEVTd$ WITH $\Delta LEVsc$ AND SET THE LARGER VALUE TO LEV OPENING-DEGREE CHANGE MARGIN $\Delta LEV$. HOWEVER, IN THE CASE OF $LEV0>Lmaxsc$, SET $\Delta LEVTd$ TO $\Delta LEV$.

**S9** ADD $\Delta LEV$ TO CURRENT LEV OPENING-DEGREE LEV0 AND SET IT TO LEV OPENING-DEGREE LEV TO BE OUTPUTTED NEXT TIME $LEV = LEV0 + \Delta LEV$

RETURN

14

F I G . 4

(a) Ph DIAGRAM OF REFRIGERANT PASSING THROUGH THROTTLE VALVE 20

Ph DIAGRAM OF REFRIGERANT PASSING THROUGH THROTTLE VALVE 49

P( MPa)

INTERMEDIATE PRESSURE

DRYNESS DEGREE Xmo = 1

h (kJ / kg)

(b)

DRYNESS DEGREE Xmo > 1

(c)

DRYNESS DEGREE Xmo < 1

FIG. 5

(a)                                              (b)

2    45                                    45    2        2                                    45

40
37
1a                                              1b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003185286 A
- US 2007107451 A
- JP 2008106738 A
- JP 2007051841 A
- JP 2005274085 A